# EUROPEAN PATENT SPECIFICATION

(11) **EP 3 810 455 B1**
(45) Date of publication and mention of the grant of the patent: **27.12.2023**
(21) Application number: 19742935.0
(22) Date of filing: 19.06.2019
(51) Int. Cl.: B60L 5/00, B60L 53/12, B60L 53/30, H02J 50/00

(54) **METHOD FOR DIRECT ROADWAY INSTALLATION OF INDUCTORS FOR INDUCTIVE ELECTRIC POWER TRANSFER**
VERFAHREN ZUR DIREKTEN FAHRBAHNINSTALLATION VON INDUKTOREN FÜR INDUKTIVE ELEKTRISCHE ENERGIEÜBERTRAGUNG
PROCÉDÉ D'INSTALLATION DE CHAUSSÉE DIRECTE DE BOBINES D'INDUCTION POUR TRANSFERT D'ÉNERGIE ÉLECTRIQUE PAR INDUCTION

(30) Priority: 20.06.2018 IT 201800006495
(43) Date of publication of application: 28.04.2021
(73) Proprietor: Sinelec S.p.A., 15057 Tortona (AL) (IT)
(72) Inventor: GUGLIELMI, Paolo, 10143 Torino (IT); CIRIMELE, Vincenzo, 87020 Verbicaro (CS) (IT); PERRONE, Walter, 10098 Rivoli (TO) (IT)
(74) Representative: Studio Torta S.p.A.
(86) International application number: PCT/IB2019/055162
(87) International publication number: WO 2019/244070

(56) References cited:
- EP-A1- 2 977 513
- EP-A1- 3 000 934
- KR-B1- 101 104 813
- US-B2- 9 796 272

## Description

### Field of the invention

The present invention relates to techniques and materials for direct installation within the road pavement of inductor coils for applications dedicated to inductive power transfer, e.g. for electric vehicles.

In particular, the invention proposes the use of materials already employed in other fields (e.g. the building industry), readapting them for the above-mentioned applications.

The proposed invention can be used for roadway installation of inductive power recharging systems, e.g. for electric vehicles, or for any installation where active elements are present which may suffer from electromagnetic coupling problems, in particular of the capacitive type, relative to the ground in which they have to be positioned.

An application that is naturally addressed by the invention concerns the inductive recharging systems for electric vehicles/systems, whether moving or stationary.

The invention solves the problem of the capacitive couplings to ground that are present in case of direct installation of inductive elements under the road pavement.

The invention allows obtaining a low-cost installation protected against atmospheric agents, which can be integrated into the road infrastructure, thus eliminating the need for any additional enclosures.

The invention is directed to both the automotive field and the road infrastructure field. In fact, the invention is meant to be applied to the inductive recharging technology, which involves operators in both of such fields.

The invention may turn out to be particularly interesting for companies interested in the development of inductive transfer technologies.

### Background art

In the current state of the art, no consolidated technologies exist for the application addressed by the invention. The invention is therefore presented as being totally innovative.

For stationary-vehicle commercial applications, the coil is installed on top of the road pavement within suitable non-ferromagnetic enclosures, with consequent drawbacks in terms of space occupation, practicality and risk of acts of vandalism.

The alternative solutions proposed so far by other researchers working on the same subject require making an excavation and laying the coils "in air" through the use of plastic structures.

The excavation is then covered with sheets of material such as fiberglass, which is unsuitable as pavement because of mechanical reasons, e.g. insufficient tyre grip, and its high cost, which would not allow for large-scale installation.

Some prototypes for inductive recharging require laying on the road pavement by means of suitable enclosures.

For obvious reasons, such a solution is not suitable for moving-vehicle applications. Several documents exist which describe known solutions, some of which will be commented on below. Such comments are useful to introduce and underline the drawbacks of the solutions that are available today.

Document US20120103741A1 describes an inductive recharging system with a "supply track" within the road pavement. In this case, the system requires the construction of some sort of container made of conductive material for the coil and a cover made of plastic or generally non-metallic material. Therefore, the system does not envisage direct burying of the coil and does not resort to methods and materials traditionally employed for road paving. US9796272 B2 (Richards Bryan) discloses inductive coils embedded in an asphalt roadway structure.

Documents US2532231A and US1992214A describe systems that utilize coils for traffic control applications.

Such systems do not suffer from the typical problems of inductive transmission systems due to the different geometry of the conductors in use and to the different utilization in electromagnetic terms. In these cases, in fact, the installed coils are not powered, but used as passive sensors, or are powered at very low frequencies, well below the kilohertz, for which electromagnetic coupling phenomena are not detectable.

KR 101104813B1 relates to a power feeding device for an electric vehicle that is protected by a concrete structure, and more particularly, a power feeding device including a feeding line and a feeding core protected by a waterproof insulating tube is nested in the concrete structure under the asphalt road. It relates to a power supply device for an electric vehicle that operates normally while being buried in the road, and while being protected from deformation and damage of the road, which are commonly caused by the operation of the vehicle, temperature, rain, and so on.

EP 3000934A1 provides for a paved structure capable of feeding power to a traveling body in a non-contact manner. The paved structure, feeding power to a power receiver provided in a traveling body through an electromagnetic wave, includes: a depression extending in the direction in which the traveling body runs; a magnetic member laid in the depression; a power feeding body laid on the upper surface of the magnetic member to feed power to the power receiver through an electromagnetic wave; and a power feeding body protector laid in the depression to cover the power feeding body.

At any rate, the above-mentioned patents do not provide any particular description of the materials and techniques employed in order to install the coils under the road pavement, and no mention is made as to the capacitive coupling problems that may be encountered in the applications addressed by the invention.

### Object and summary

The present invention relates to a method for direct roadway installation of inductors for inductive electric power transfer. The method comprises the steps of:
- making a coil and arranging it onto a base of dielectric material,
- making an excavation suitable for housing the coil,
- depositing a first layer of dielectric material,
- positioning the coil,
- depositing a second layer of dielectric material,
- waiting for the layer of dielectric material to dry, and
- depositing a paving layer.

According to the invention, the dielectric layer is bituminous lacquer or tar paint.

As an alternative, the dielectric material is epoxy resin for transformers.

Furthermore, the material of the paving layer is selected among cement, cold asphalt and hot asphalt.

In some embodiments, the coil is made from insulated litz wire.

In several embodiments, a capacitive element, made by using the multilayer printed circuit technology, is connected to the coil.

Finally, the installation does not require any coil protection enclosures, since the coil is directly coated with the road paving materials.

### Brief description of the drawings

Further features and advantages of the invention will be illustrated in the following detailed description, which is provided merely by way of non-limiting example with reference to the annexed drawings, wherein:
- Figure 1 shows a general diagram of an IPT system for electric vehicles,
- Figures 2a, 2b and 2c show an example of coil burying,
- Figure 3 shows an exemplary diagram representing the capacitive coupling effect of the coil relative to the ground,
- Figures 4a and 4b show the amplitude and phase trends of the impedance of the coil,
- Figure 5 shows a qualitative representation of the idea underlying the invention,
- Figures 6a and 6b show an example of a test coil with interposition of bituminous lacquer or tar paint,
- Figures 7a and 7b show the amplitude and phase trends of the impedance of the coil with interposition of tar paint, and
- Figures 8a, 8b, 8c and 8d show the steps of one of the possible procedures for burying the transmitter coil.

### Detailed description

The following description will illustrate various specific details useful for a deep understanding of some examples of one or more embodiments. The embodiments may be implemented without one or more of such specific details or with other methods, components, materials, etc. In other cases, some known structures, materials or operations will not be shown or described in detail in order to avoid overshadowing various aspects of the embodiments. Any reference to "an embodiment" in this description will indicate that a particular configuration, structure or feature described in relation to the embodiment is comprised in at least one embodiment. Therefore, the phrase "an embodiment" and other similar phrases, which may be present in different parts of this description, will not necessarily be all related to the same embodiment. Furthermore, any particular configuration, structure or feature may be combined in one or more embodiments as deemed appropriate.

The references below are therefore used only for simplicity's sake, and do not limit the protection scope or extension of the various embodiments.

The invention has been conceived and developed within the sphere of the research for a wireless recharging system for moving electric vehicles funded by the European FABRIC project under grant agreement no. 605405 in the 7th framework programme for research. Compared to prototype systems developed by other research teams, the invention offers the advantage of eliminating the external enclosures for laying and protecting the coils. The OLEV system, developed by the Korea Advanced Institute of Technology (KAIST), is described in the article "Modern Advances in Wireless Power Systems for Roadway Powered Electric Vehicles", IEEE Transactions on industrial electronics, vol. 63, no. 10, October 2016.

Unlike the system developed by the Korea Advanced Institute of Technology (KAIST), wherein the coils are laid on the ground by using dedicated enclosing structures, the techniques presented herein as an invention allow using low-cost materials readily available on the market. Through the laying procedure described herein, the coils can be buried by using the traditional road paving methods, with advantages in terms of ease of installation, shorter laying times, and lower overall installation costs.

Another example of a known system is visible on the Qualcomm web site: https://www.qualcomm.com/news/ong/2017/05/18/wireless-dynamic-ev-charging-evolution-qualcomm-halo.

In this case, the coil system is suspended underneath the road pavement and covered with materials that are unsuitable for road paving.

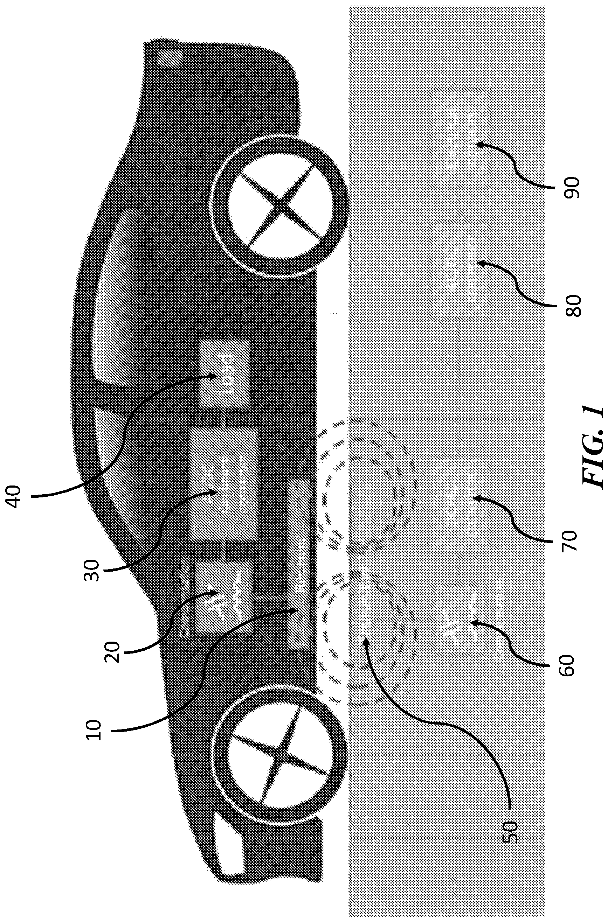

In order to fully understand the functionalities of the invention, it is necessary to provide a brief description of an inductive power transfer system (IPT) for recharging electric vehicles. Such a system can be schematized as in Figure 1.

An IPT system is essentially based on the inductive coupling of two coils, i.e. a fixed one on the ground side, called transmitter, and a second coil installed under the floor of the vehicle.

The transmitter coil is powered by an electronic power converter, which, by supplying high-frequency current to the coil, allows the latter to generate a field that is concatenated by the coil aboard the vehicle.

Through the phenomenon of magnetic induction (Faraday's law), the concatenated high-frequency field results in a voltage induced in the receiver coil. By connecting a load to such coil, it is possible to obtain a transfer of electric energy in the absence of contact. In order to increase the transfer capacity, i.e. to maximize power and increase the system efficiency, reactive elements are connected to said coils for compensating for the reactance thereof.

In most cases, such components consist of capacitors connected according to different circuit schemes, possibly using additional inductors not dedicated to power transfer.

With reference to Figure 1, a receiver coil, designated by reference numeral 10, is provided on board a car. The receiver coil 10 is connected to compensation devices 20, which in turn are connected to an on-board AC/DC converter 30. Finally, there is a load 40 connected to the AC/DC converter 30.

Under the road pavement a transmitter coil is installed, designated by reference numeral 50. The transmitter coil 50 is connected to compensation devices 60, which in turn are connected to a DC/AC converter 70. Finally, there may be an AC/DC converter 80, in turn connected to the electric network 90. The devices described herein may be absent or may be integrated into one or more electric converters/components (such as transformers). The description refers to Figure 1, which is a non-limiting example of one possible embodiment.

The inventors have already filed, on 23rd March 2017, a prior patent (application no. 102017000032290) concerning a technology for manufacturing said capacitors for the same applications addressed by the invention described herein.

Within the scope of the European FABRIC project, the inventors committed themselves to the construction of a track for on-road inductive recharging consisting of 46 transmitters making up a recharging lane approx. 100 meters long.

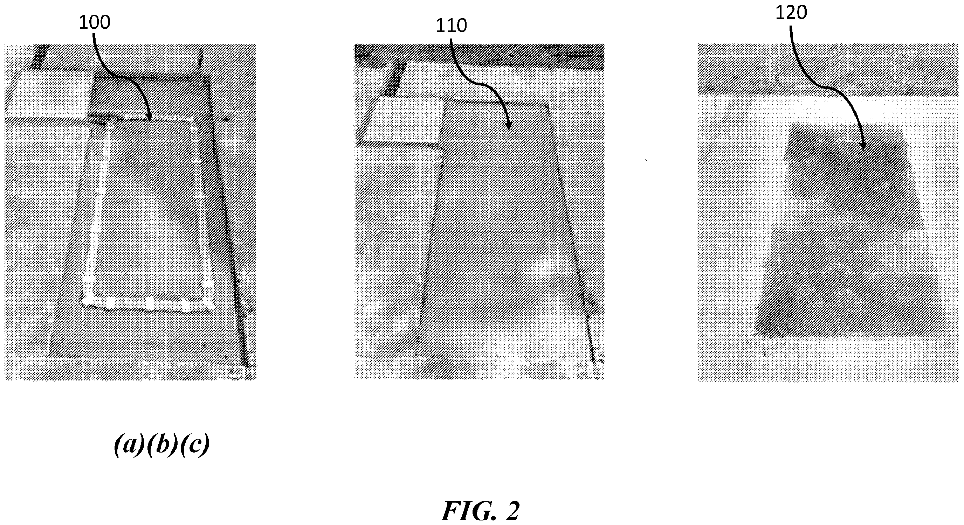

In order to understand which technique would be most appropriate for laying said coils, the inventors built a first test version thereof, visible in Figure 2.

In particular, Figure 2a shows the coil 100 laid in the excavation specially made for this purpose. The coil 100 is covered with a first layer of cement 110, as shown in Figure 2b, and is finally covered with a second layer of cold asphalt 120, as shown in Figure 2c (these materials were proposed by project partner Tecnositaf, since they were considered to be suitable for the installation and are commonly employed for road maintenance work).

The resistance and self-inductance values of said coil were preliminarily measured in laboratory by means of an impedance meter. The values obtained were: resistance R = 303 mohm, self-inductance L = 211.8 µH.

When the burying of the coil was complete, the coil parameters were measured again 48 hours later. In this case, totally unexpected values were obtained, i.e. R=17.2 ohm and L = 301.0 µH.

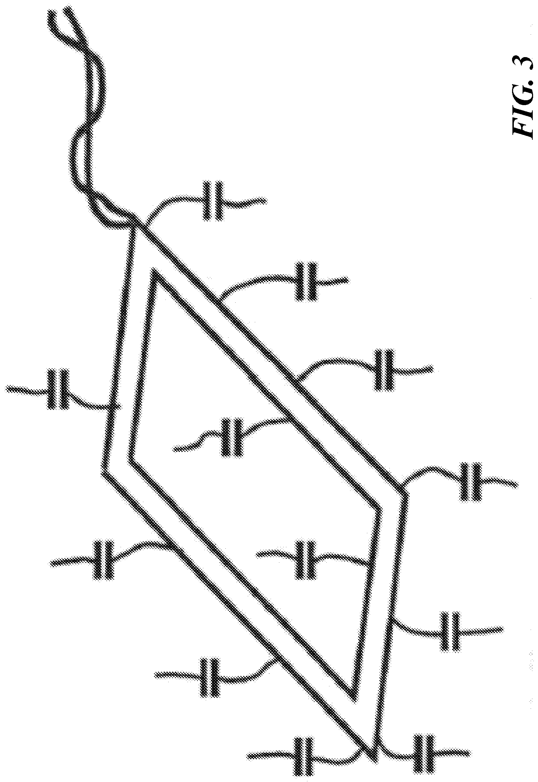

The inventors tried to find the cause for such a strong discrepancy. The formulated hypothesis that was considered to be most trustworthy led to believe that the cause was the presence of capacitive coupling effects between the coil conductors and the ground, according to a general qualitative scheme as shown in Figure 3. Said Figure 3 qualitatively represents the phenomenon of capacitive coupling to ground as a large number of capacitors connected in parallel to the buried coil. According to such scheme, the ground represents one of the conductors that constitute an equivalent armature of a capacitor, while the second armature consists of the surface of the conductors that make up the coil. This hypothesis was verified in laboratory by reproducing the same burying conditions on a new test coil of smaller dimensions and by comparing the frequency trend of the impedance of the new coil before and after burying.

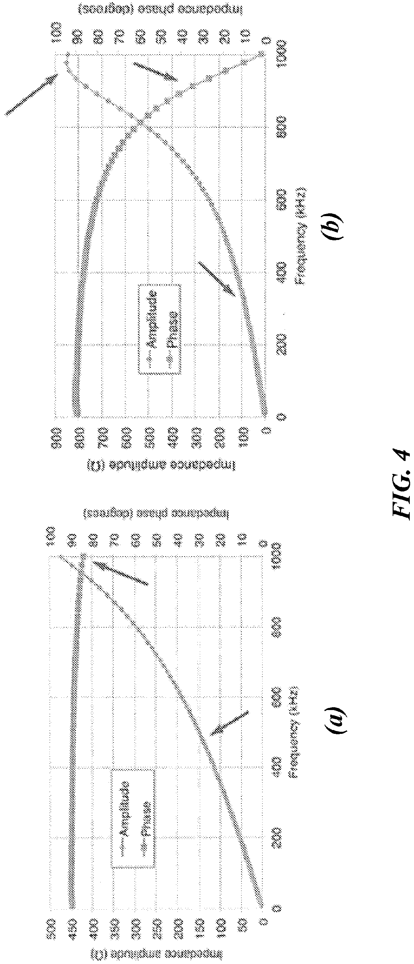

The result of such measurement can be seen in Fig. 4.

The same discrepancy observed in the first case was found with the new coil as well. In particular, a phenomenon that is typical of resonance was highlighted, i.e. the presence of strong non-linearity and a local maximum value of the impedance at an impedance phase equal to zero. This result confirmed the initial assumption.

In particular, Figure 4a shows the results of the preliminary measurement taken on the coil in the in-air condition. On the other hand, Figure 4b shows the results of the measurement taken after burying. In particular, the arrows highlight the discrepancy points, the deviation from linearity, and the presence of a peak at a zero phase.

It must be pointed out that such trends refer to the laboratory systems used for investigating the problem, which employed coils that were much smaller than those actually used. Therefore, the modulus and phase "deformation" effects are observed at higher frequencies than those which are typical of the intended applications.

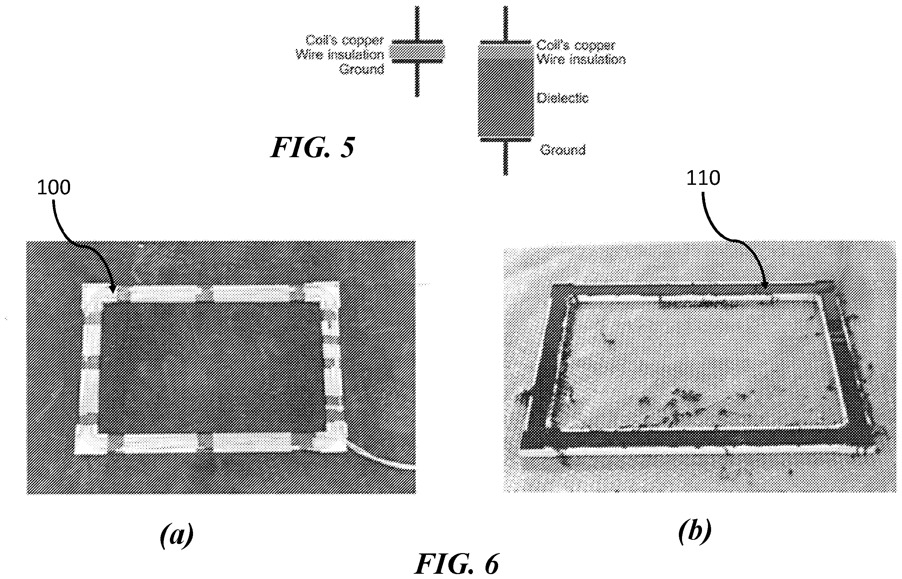

At this point, the key concept on which the present invention is based was formulated. Such concept can be schematized by means of Figure 5 and can be formulated as follows: "if the ground and the coil represent the two armatures of a capacitor, in order to decrease its capacity it is sufficient to interpose a sufficiently thick layer of dielectric material between the coil and ground".

Several coils of the same size as the one of the second laboratory test were then made, and many tests were carried out thereon by using different materials and material combinations.

Such materials were selected among those suggested by the road-work experience of co-inventor partner Tecnositaf and among those suggested by the electrotechnical experience of the co-inventors from the Polytechnic Institute.

It was found that only a couple of the tested materials (eight different materials) led to achieve the desired effect.

Among these tested dielectric materials, the most interesting one turned out to be bituminous lacquer or waterproofing bituminous lacquer, also known as tar paint. Bituminous lacquer or tar paint is a bituminous material that is typically used for surface insulation purposes in the building trade. It usually has also a waterproofing effect.

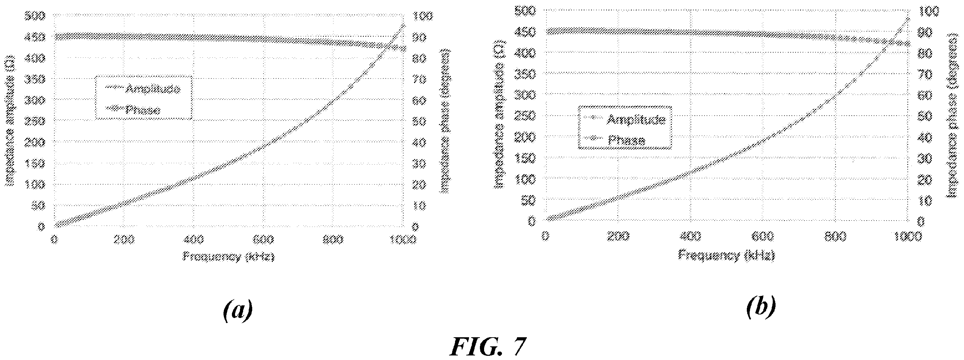

For completeness' sake, Figure 7 shows a comparison among the coil impedance readings before burying it and after burying it by interposing a 2 cm layer of tar paint, visible in Figure 6.

Following the interposition of said layer of dielectric material, a considerable diminution of similar problems was observed also in the presence of the other material layers, though with some slight differences.

Following these evaluations, it was decided to adopt such dielectric material, along with a number of actions for making and laying the transmitter coils that would allow for direct burying without resorting to external enclosures, while eliminating the capacitive coupling problem.

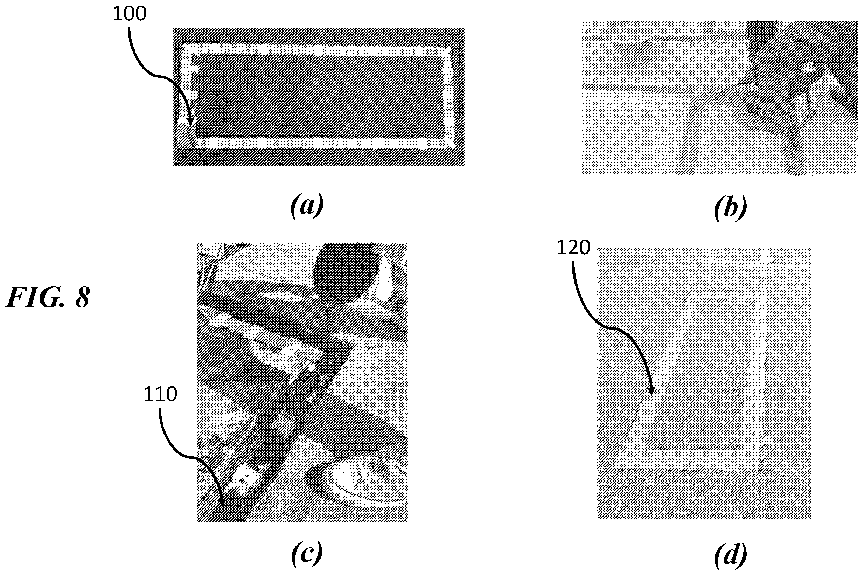

Such procedure can be summarized in a few steps with reference to the pictures shown in Figure 8.

In a first step the coil is made, e.g. by using insulated litz wire, and is placed onto a base of dielectric material, which provides a first dielectric level relative to the ground, see Figure 8 (a). As an alternative, copper tubes may be used for making the coil.

In a next step, an excavation is made which is suitable for housing the coil, see Figure 8 (b).

It must be underlined that the shape of the excavation may have characteristics other than those specified herein. The shape proposed herein is the one the minimizes material usage, since it reduces the excavation volume to a minimum.

A first layer of tar paint is then poured.

Afterwards, the coil is positioned (note that, along with the coil, also the joint integration of the capacitor of the above-mentioned patent has been conceived).

After the coil has been deposited in the excavation, the coil is covered with another layer of tar paint, see Figure 8 (c).

When the tar paint is dry (24/48 hours), the paving layer can be laid.

The materials used for the paving layer were cement, cold asphalt and hot asphalt, see Figure 8 (d).

The dielectric material useful for insulating the coil may alternatively be an epoxy resin for transformers. It should be noted that this material is extremely expensive, since it is used in high-tech applications. In addition, the rigidity acquired by the dry resin does not seem to be compatible with the compression resistance characteristics necessary for on-road installation.

In particular, the main function of the dielectric base is to provide a mechanical support for preserving the coil shape during all the burying steps.

Simpler and cheaper materials may also be used, such as wood, but it will be necessary to verify their mechanical characteristics, which will have to ensure the required mechanical strength. So far this aspect has not been investigated.

Tests are being carried out to identify other materials, but until now tar paint (in particular, Black Catramina by Multichimica and Catramix by Ecoservice) appears to be the only material capable of providing the required performance.

The invention proposes a manufacturing and installation technique for a growing technology that is of particular industrial interest, i.e. inductive power transfer for stationary and/or moving vehicles.

The invention re-defines the use of materials that are typically employed in other production fields to adapt them to an innovative application under strong development. The invention makes it possible to speed up the coil installation process, eliminating the need for resorting to coil protection enclosures.

The invention makes it possible to cover the coil directly with the materials and methods traditionally used for road paving.

Of course, without prejudice to the principle of the invention, the embodiments and the implementation details may be extensively varied from those described and illustrated herein merely by way of non-limiting example, without however departing from the protection scope of the present invention as set out in the appended claims.

## Claims

1. Method for direct roadway installation of inductors for inductive electric power transfer, comprising the steps of:
- making a coil and arranging it onto a base of dielectric material,
- making an excavation suitable for housing the coil,
- depositing a first layer of dielectric material,
- positioning the coil,
- depositing a second layer of dielectric material,
- waiting for the layer of dielectric material to dry, and
- depositing a paving layer,
wherein said dielectric material is bituminous lacquer or tar paint or epoxy resin for transformers.

2. Method according to one of the preceding claims, wherein the material of said paving layer is selected among cement, cold asphalt and hot asphalt.

3. Method according to one of the preceding claims, wherein said coil is made from insulated litz wire or copper tubes.

4. Method according to one of the preceding claims, wherein a capacitive element, made by using the multilayer printed circuit technology, is connected to said coil.

5. Method according to one of the preceding claims, wherein said installation does not require any coil protection enclosures, since the coil is directly coated with the road paving materials.

## Patentansprüche

1. Verfahren zur direkten Fahrbahninstallation von Induktoren für induktive elektrische Energieübertragung, das die folgenden Schritte umfasst:
- Herstellen einer Spule und Anordnen der Spule auf einer Basis aus dielektrischem Material,
- Ausheben eines für die Unterbringung der Spule geeigneten Grabens,
- Aufbringen einer ersten Schicht aus dielektrischem Material,
- Positionieren der Spule,
- Aufbringen einer zweiten Schicht aus dielektrischem Material,
- Warten, bis die Schicht aus dielektrischem Material getrocknet ist, und
- Aufbringen einer Straßenbelagsschicht,
wobei das dielektrische Material Bitumenlack oder Teerfarbe oder Epoxidharz für Transformatoren ist.

2. Verfahren nach einem der vorhergehenden Ansprüche, bei dem das Material der Straßenbelagsschicht unter Zement, Kaltasphalt und Heißasphalt ausgewählt ist.

3. Verfahren nach einem der vorhergehenden Ansprüche, bei dem die Spule aus isoliertem Litzendraht oder Kupferrohren hergestellt wird.

4. Verfahren nach einem der vorhergehenden Ansprüche, bei dem ein kapazitives Element, das unter Verwendung der Mehrschicht-Leiterplatten-Technologie hergestellt wurde, mit der Spule verbunden wird.

5. Verfahren nach einem der vorhergehenden Ansprüche, bei dem die Installation keine Spulenschutzgehäuse erfordert, da die Spule direkt mit den Straßenbelagsmaterialien beschichtet wird.

## Revendications

1. Procédé d'installation directe sur route de bobines d'induction pour le transfert d'énergie électrique par induction, comprenant les étapes consistant à :
- réaliser une bobine et l'agencer sur une base en matériau diélectrique,
- réaliser une excavation adaptée au logement de la bobine,
- déposer une première couche de matériau diélectrique,
- positionner la bobine,
- déposer une deuxième couche de matériau diélectrique,
- attendre que la couche de matériau diélectrique sèche et
- déposer une couche de pavage,
dans lequel ledit matériau diélectrique est une laque bitumeuse ou une peinture au goudron ou une résine époxy pour transformateurs.

2. Procédé selon la revendication 1, dans lequel le matériau de ladite couche de pavage est choisi parmi le ciment, l'asphalte froid et l'asphalte chaud.

3. Procédé selon l'une des revendications précédentes, dans lequel ladite bobine est réalisée à partir de fil de Litz isolé ou de tubes de cuivre.

4. Procédé selon l'une des revendications précédentes, dans lequel un élément capacitif, fabriqué en utilisant la technologie des circuits imprimés multicouches, est connecté à ladite bobine.

5. Procédé selon l'une des revendications précédentes, dans lequel ladite installation ne nécessite aucune enveloppe de protection de bobine, puisque la bobine est directement revêtue avec les matériaux de pavage de routes.
